(19) **Europäisches Patentamt**
**European Patent Office**
**Office européen des brevets**

(11) **EP 3 420 318 B1**

(12) **EUROPÄISCHE PATENTSCHRIFT**

(45) Veröffentlichungstag und Bekanntmachung des Hinweises auf die Patenterteilung:
**13.05.2020 Patentblatt 2020/20**

(21) Anmeldenummer: **17707269.1**

(22) Anmeldetag: **24.02.2017**

(51) Int Cl.:
**G01D 5/20** *(2006.01)*

(86) Internationale Anmeldenummer:
**PCT/EP2017/054283**

(87) Internationale Veröffentlichungsnummer:
**WO 2017/144641 (31.08.2017 Gazette 2017/35)**

(54) **DREHWINKELSENSOR**

ANGULAR POSITION SENSOR

CAPTEUR D'ANGLE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2016 DE 102016202871**

(43) Veröffentlichungstag der Anmeldung:
**02.01.2019 Patentblatt 2019/01**

(73) Patentinhaber: **Robert Bosch GmbH**
**70442 Stuttgart (DE)**

(72) Erfinder:
• **UTERMOEHLEN, Fabian**
**71229 Leonberg (DE)**
• **MERZ, Andreas**
**71691 Freiberg Am Neckar (DE)**

(56) Entgegenhaltungen:
**EP-A2- 2 570 776     WO-A1-2011/089519**
**US-A- 6 011 389     US-A1- 2012 293 166**
**US-B1- 6 534 970**

## Beschreibung

### Gebiet der Erfindung

Die Erfindung betrifft einen Drehwinkelsensor, mit dem beispielsweise ein Drehwinkel zwischen einer Welle und einem weiteren Bauteil bestimmt werden kann.

### Stand der Technik

Um Drehwinkel zu messen, sind beispielsweise Drehwinkelsensoren bekannt, bei denen ein Magnet über einen entsprechenden Magnetfeldsensor gedreht wird. Die Messung des Magnetfeldvektors erlaubt dann einen Rückschluss auf den Drehwinkel. Derartige Sensoren reagieren auch auf externe Magnetfelder, die beispielsweise durch einen Stromfluss von benachbart angeordneten Stromkabeln verursacht werden und können sehr störempfindlich sein.

Ein weiterer Typ Drehwinkelsensor nutzt einen Wirbelstromeffekt aus. Dabei wird beispielsweise ein metallisches Target über Sensorspulen bewegt, die mit einer Wechselspannung versorgt werden und in dem Target einen Wirbelstrom induzieren. Dies führt zur Reduzierung der Induktivitäten der Sensorspulen und erlaubt, über eine Frequenzänderung auf den Drehwinkel zu schließen. Beispielsweise sind die Spulen Bestandteil eines Schwingkreises, dessen Resonanzfrequenz sich bei einer Veränderung der Induktivität verschiebt. Dieser Typ von Drehwinkelsensor kann jedoch eine hohe Querempfindlichkeit gegenüber Einbautoleranzen (vor allem ein Verkippen des Targets) aufweisen. Auch kann die erzeugte Frequenz durch externe elektromagnetische Felder gestört werden (Injection Locking), da üblicherweise mit Frequenzen im Bereich von einigen zehn MHz gearbeitet wird.

Die EP 0 909 955 B1 zeigt einen Drehwinkelsensor mit auf einem Target kurzgeschlossene planare Leiterschleifen, die mit dem elektromagnetischen Wechselfeld einer Erregerspule wechselwirken. Die EP 2 570 776 A2 offenbart einen ähnlichen induktiven Erfassungskodierer.

### Offenbarung der Erfindung

### Vorteile der Erfindung

Ausführungsformen der vorliegenden Erfindung können in vorteilhafter Weise ermöglichen, einen Drehwinkelsensor bereitzustellen, der besonders ökonomisch herzustellen ist, wobei er einfach auszuwertende Messsignale liefert.

Ideen zu Ausführungsformen der vorliegenden Erfindung können unter anderem als auf den nachfolgend beschriebenen Gedanken und Erkenntnissen beruhend angesehen werden.

Die Erfindung betrifft einen Drehwinkelsensor, der insbesondere in einer Umgebung mit hohen elektromagnetischen Störfeldern eingesetzt werden kann. Beispielsweise kann der Drehwinkelsensor im Motorraum oder in der Nähe des Motorraums eines Fahrzeugs verwendet werden, beispielsweise zur Bestimmung einer Position einer Drosselklappe, einer Rotorposition eines BLDC-Motors, einer Position eines Fahrpedals oder einer Position einer Nockenwelle. Der im Folgenden beschriebene Drehwinkelsensor ist kostengünstig, benötigt einen geringen Bauraum und basiert auf einem einfachen Messprinzip.

Gemäß einer Ausführungsform der Erfindung umfasst der Drehwinkelsensor ein Statorelement mit einer Statorsendespule und wenigstens zwei zueinander winkelversetzten, gleichartig aufgebauten Statorempfangsspulen, die in einer Leiterplatte ausgebildet sind; ein bezüglich des Statorelements um eine Drehachse drehbar gelagertes Rotorelement mit einer Rotorempfangsspule und einer Rotorsendespule, die miteinander elektrisch verbunden sind; wobei die Rotorempfangsspule mit der Statorsendespule induktiv gekoppelt ist, so dass ein durch die Statorsendespule erzeugtes elektromagnetisches Feld in der Rotorempfangsspule einen Strom induziert, der durch die Rotorsendespule fließt, so dass die Rotorsendespule ein weiteres elektromagnetisches Feld erzeugt; wobei die wenigstens zwei Statorempfangsspulen mit der Rotorsendespule induktiv gekoppelt sind, so dass die induktive Kopplung von einem Drehwinkel zwischen dem Statorelement und dem Rotorelement abhängig ist, und das von der Rotorsendespule erzeugte weitere elektromagnetische Feld in den wenigstens zwei Statorempfangsspulen wenigstens zwei winkelabhängige Wechselspannungen induziert.

Mit anderen Worten kann die Statorsendespule mit einer Wechselspannung beaufschlagt werden, die über eine induktive Kopplung der Statorsendespule mit der Rotorempfangsspule in der Rotorempfangsspule eine weitere Wechselspannung induziert. Die in der Rotorempfangsspule erzeugte Wechselspannung erzeugt einen Stromfluss in der Rotorsendespule, der über eine induktive Kopplung der Rotorsendespule mit den Statorempfangsspulen in den Statorempfangsspulen jeweils eine weitere Wechselspannung erzeugt, die gemessen werden kann und aus deren Messwerten ein relativer Drehwinkel zwischen dem Statorelement und dem Rotorelement ermittelt werden kann.

Insbesondere ist der Betrag bzw. die Amplitude der jeweiligen induzierten Wechselspannung vom Drehwinkel abhängig. Die jeweilige induzierte Wechselspannung bzw. ihr Betrag kann als ein Messsignal des Drehwinkelsensors aufgefasst werden, das von der jeweiligen Statorempfangsspule bereitgestellt wird.

Eine Spule kann dabei durch eine Mehrzahl von Leiterbahnen in oder auf der Leiterplatte definiert werden, die alle in Reihe geschaltet sind und die über Anschlüsse an der Leiterplatte gemeinsam bestromt werden können. Dabei können die Rotorempfangsspule und die Rotorsendespule miteinander in Serie kurzgeschlossen sein.

Jede der wenigstens zwei Statorempfangsspulen ist aus einer Mehrzahl von Radialleitern und Umfangsleitern aufgebaut, die in zwei Ebenen einer Leiterplatte gebildet sind, so dass je Statorempfangsspule aus den Radialleitern und den Umfangsleitern wenigstens zwei gegenläufige Teilwindungen gebildet sind. Die Radialleiter und/oder Umfangsleiter können jeweils aus Leiterbahnen aufgebaut sein, die in zwei Ebenen der Leiterplatte verlaufen und beispielsweise über Durchkontaktierungen miteinander verbunden sind. Mit anderen Worten können die Radialleiter und/oder die Umfangsleiter lediglich abschnittsweise in einer Ebene der Leiterplatte verlaufen.

Jede der Teilwindungen der Statorempfangsspule ist aus zwei Radialleitern und zwei Umfangsleitern aufgebaut, die an ihren Enden miteinander verbunden sind.

Eine Teilwindung kann dabei ein Teil einer Spule sein, der Leiter umfasst, die alle die gleiche Fläche umlaufen und/oder die miteinander in Reihe geschaltet sind.

Zwei Teilwindungen einer Spule sind dann gegenläufig orientiert, wenn sie bei einem Stromfluss durch die Spule jeweils im Uhrzeigersinn und gegen den Uhrzeigersinn von Strom durchflossen werden.

Die Radialleiter verlaufen im Wesentlichen in radialer Richtung von einem Innenende zu einem Außenende, wobei jeweils zwei Radialleiter mit gegenläufiger Stromrichtung zumindest teilweise überdeckend auf der Leiterplatte angeordnet sind. Beispielsweise können die Radialleiter alle radial zu einem gemeinsamen Mittelpunkt und/oder zu einer Symmetrieachse des Statorelements verlaufen. Diese Symmetrieachse kann eine Achse sein, die bei exakter Ausrichtung des Statorelements mit dem Rotorelement mit der Drehachse des Rotorelements übereinstimmt. Die Radialleiter können sich dadurch überdecken, dass sie sich (bezüglich einer Blickrichtung parallel zur Symmetrieachse) schneiden (aber am Schnittpunkt in unterschiedlichen Ebenen der Leiterplatte verlaufen), oder dass sie in unterschiedlichen Ebenen der Leiterplatte (bezüglich einer Blickrichtung parallel zur Symmetrieachse) zumindest abschnittsweise übereinander verlaufen.

Die Umfangsleiter verlaufen bezüglich der Symmetrieachse in Umfangsrichtung, wobei ein Umfangsleiter jeweils zwei Innenenden oder jeweils zwei Außenenden von Radialleitern verbindet und jeder der Umfangsleiter eine Durchkontaktierung aufweist, bei der der Umfangsleiter die Ebenen der Leiterplatte wechselt. Ein Umfangsleiter kann an einem ersten Ende mit einem ersten Radialleiter in einer ersten Ebene der Leiterplatte verbunden sein, dann in Umfangsrichtung in der ersten Ebene verlaufen, dann in einer Mitte zu einer zweiten Ebene der Leiterplatte wechseln (mittels der Durchkontaktierung), dann in Umfangsrichtung (und insbesondere in der gleichen Richtung) in der zweiten Ebene der Leiterplatte weiter verlaufen und mit seinem zweiten Ende mit einem zweiten Radialleiter in der zweiten Ebene der Leiterplatte verbunden sein.

Auf diese Weise kann erreicht werden, dass die Statorempfangsspulen alle auf kompaktem Raum in zwei Ebenen einer Leiterplatte realisiert werden können. Durch die spezielle Geometrie der Statorempfangsspulen kann eine besonders hohe Überdeckung der innerhalb der Statorempfangsspule zur Verfügung stehenden Fläche durch die Statorempfangsspule erreicht werden.

Gemäß einer Ausführungsform der Erfindung sind die Umfangsleiter zwischen einer Durchkontaktierung und einem Ende und/oder zwischen ihren Enden bogenförmig gekrümmt. Die Umfangsleiter können insgesamt so gekrümmt sein, dass ihre Mitte radial weiter außen oder radial weiter innen liegt als ihre Enden. Auf diese Weise kann in der Mitte eine Durchkontaktierung für den Umfangsleiter einer Statorempfangsspule vorgesehen werden, die keine Umfangsleiter einer anderen Statorempfangsspule berührt. Zwischen einem Ende und ihrer Durchkontaktierung können die Umfangsleiter kreisbogenförmig gekrümmt sein.

Gemäß einer Ausführungsform der Erfindung sind die Statorsendespule und die Statorempfangsspulen zusammen in zwei Ebenen der Leiterplatte ausgebildet. Nicht nur die Statorempfangsspulen, auch die Statorsendespule, die die Statorempfangsspulen umgeben kann, kann aus Leiterbahnen in den gleichen beiden Ebenen oder zumindest in einer der beiden Ebenen ausgebildet sein. Dadurch, dass die Spulen in maximal zwei Ebenen angeordnet werden können ist eine besonders kostengünstige und einfache Herstellung möglich. Im einfachsten Fall reicht also eine lediglich zweilagige Leiterplatte für die Bereitstellung der Sende-/Empfangs-Spulen auf der Rotorleiterplatte und auf der Statorleiterplatte. Es ist zu verstehen, dass die Leiterplatte weitere Ebenen aufweisen kann (also eine mehrschichtige Leiterplatte sein kann), in der andere Leiterbahnen des Drehwinkelsensors (beispielsweise die einer Auswerteeinheit zum Auswerten der Messsignale) ausgebildet sein können.

Gemäß einer Ausführungsform der Erfindung ist die Durchkontaktierung eines Umfangsleiters in einer Mitte zwischen den beiden Außenenden bzw. Innenende der jeweiligen Radialleiter angeordnet. Die Mitte kann dadurch definiert sein, dass sie von den beiden Enden des Umfangsleiters gleich weit entfernt ist. Die Durchkontaktierung in der Mitte eines Umfangsleiters kann einen anderen radialen Abstand von der Symmetrieachse aufweisen als die Enden des Umfangsleiters.

Gemäß einer Ausführungsform der Erfindung liegen die Durchkontaktierungen der die Innenenden der Radialleiter verbindenden Umfangsleiter radial weiter innen als die jeweiligen Innenenden und/oder liegen die Durchkontaktierungen der die Außenenden der Radialleiter verbindenden Umfangsleiter radial weiter außen als die jeweiligen Außenenden. Auf diese Weise wird durch die jeweilige Statorempfangsspule eine möglichst große Fläche überdeckt.

Gemäß einer Ausführungsform der Erfindung sind die Durchkontaktierungen der die Innenenden der Radialleiter verbindenden Umfangsleiter an einer Stelle des jeweiligen Umfangsleiters mit minimalem Abstand zur Symmetrieachse angeordnet und/oder sind die Durchkontaktierungen der die Außenenden der Radialleiter verbindenden Umfangsleiter an einer Stelle des jeweiligen Umfangsleiters mit maximalem Abstand zur Symmetrieachse angeordnet. Auf diese Weise kann die von der jeweiligen Statorempfangsspule überdeckte Fläche maximiert werden und auch der Abstand einer Durchkontaktierung von anderen Leiterbahnen maximiert werden.

Gemäß einer Ausführungsform der Erfindung weisen die Innenenden der Radialleiter alle einen gleichen Abstand zu der Symmetrieachse auf und/oder weisen die Außenenden der Radialleiter alle einen gleichen Abstand von der Drehachse auf. Mit anderen Worten können die Teilwindungen einer Statorempfangsspule und/oder die Statorempfangsspulen rotationssymmetrisch bezüglich der Symmetrieachse aufgebaut sein.

Gemäß einer Ausführungsform der Erfindung ist am Ende eines Umfangsleiters eine Durchkontaktierung angeordnet, die ein Ende eines Radialleiters mit dem Umfangsleiter in einer anderen Ebene der Leiterplatte verbindet. Eine derartige Durchkontaktierung kann notwendig sein, damit sich bei Anordnung mehrerer Statorempfangsspulen keine Überlappungen in zwei Ebenen der Leiterplatte ergeben.

Um eine höhere Symmetrie für die Statorempfangsspule zu erreichen, die wie eben beschrieben in einer Teilwindung eine zusätzliche Durchkontaktierung umfassen kann, können eine oder mehrere blinde Durchkontaktierungen in der Statorempfangsspule vorgesehen werden.

Gemäß einer Ausführungsform der Erfindung ist am Ende eines Umfangsleiters eine blinde Durchkontaktierung vorgesehen, die ein Ende eines Radialleiters mit dem Umfangsleiter auf der gleichen Ebene verbindet. Eine blinde Durchkontaktierung ist dabei eine Durchkontaktierung, die zwar zwei Ebenen der Leiterplatte elektrisch verbindet, an die allerdings lediglich Leiterbahnen einer Ebene angeschlossen sind. Im vorliegenden Fall verbindet die blinde Durchkontaktierung einen Radialleiter und einen Umfangsleiter. Die blinde Durchkontaktierung kann symmetrisch zu einer weiteren Durchkontaktierung an einem Ende eines Umfangsleiters angeordnet sein, beispielsweise punktsymmetrisch zu der Symmetrieachse.

Gemäß einer Ausführungsform der Erfindung ist die Rotorsendespule in wenigstens zwei Teilwindungen aufgeteilt, die gegenläufig orientiert sind. Auf diese Weise wird von der Statorsendespule kein Strom oder zumindest nur ein geringer Strom direkt in der Rotorsendespule induziert. Mit anderen Worten rührt ein durch die Rotorsendespulen fließender Strom aus dem Stromfluss des in der Rotorempfangsspule induzierten Stroms her.

Gemäß einer Ausführungsform der Erfindung sind die Teilwindungen der Rotorsendespule sichelförmig ausgebildet. Sichelförmige Teilwindungen können durch bogenförmige Leiterabschnitte mit unterschiedlicher Krümmung, die beide in die gleiche Richtung gekrümmt sind, begrenzt sein. Insbesondere können die bogenförmigen Leiterabschnitte kreisbogenförmig sein und/oder verschiedene Radien aufweisen. Auf diese Weise ist der Betrag der in einer Statorempfangsspule durch das Wechselmagnetfeld der Rotorsendespule induzierten Wechselspannung über eine Sinusfunktion vom Drehwinkel abhängig. Ein vom Drehwinkel abhängiges sinusförmiges Signal kann leicht ausgewertet und in den Drehwinkel umgerechnet werden.

Beispielsweise kann bei zwei Statorempfangsspulen (einem Zweiphasensystem) aus dem Quotienten der beiden Signale der Drehwinkel mittels Arcustangens bestimmt werden. Bei drei Statorempfangsspulen (einem Dreiphasensystem) kann der Drehwinkel mittels einer Clarke-Transformation der drei Signale bestimmt werden.

Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

Fig. 1 zeigt schematisch einen Querschnitt durch einen Drehwinkelsensor gemäß einer Ausführungsform der Erfindung.

Fig. 2 zeigt schematisch eine Draufsicht auf ein Statorelement für einen Drehwinkelsensor gemäß einer Ausführungsform der Erfindung.

Fig. 3 zeigt schematisch die Geometrie einer Statorempfangsspule eines Drehwinkelsensors gemäß einer Ausführungsform der Erfindung.

Fig. 4 zeigt ein Spulenlayout für eine Statorempfangsspule eines Drehwinkelsensors gemäß einer Ausführungsform der Erfindung.

Fig. 5 zeigt schematisch eine Draufsicht auf ein Rotorelement für einen Drehwinkelsensor gemäß einer Ausführungsform der Erfindung.

Fig. 6 zeigt schematisch eine Draufsicht auf ein Statorelement für einen Drehwinkelsensor gemäß einer Ausführungsform der Erfindung.

Fig. 7 zeigt schematisch die Geometrie einer Statorempfangsspule eines Drehwinkelsensors gemäß einer Ausführungsform der Erfindung.

Fig. 8 zeigt ein Spulenlayout für eine Statorempfangsspule eines Drehwinkelsensors gemäß einer Ausführungsform der Erfindung.

Fig. 9 zeigt schematisch eine Draufsicht auf ein Rotorelement für einen Drehwinkelsensor gemäß einer Ausführungsform der Erfindung.

Fig. 10 zeigt schematisch eine Draufsicht auf ein Rotorelement für einen Drehwinkelsensor gemäß einer Ausführungsform der Erfindung.

Fig. 11 zeigt ein Diagramm mit Messsignalen, die von einem Drehwinkelsensor gemäß einer Ausführungsform der Erfindung erzeugt werden.

Die Figuren sind lediglich schematisch und nicht maßstabsgetreu. Gleiche Bezugszeichen bezeichnen in den Figuren gleiche oder gleichwirkende Merkmale.

Ausführungsformen der Erfindung

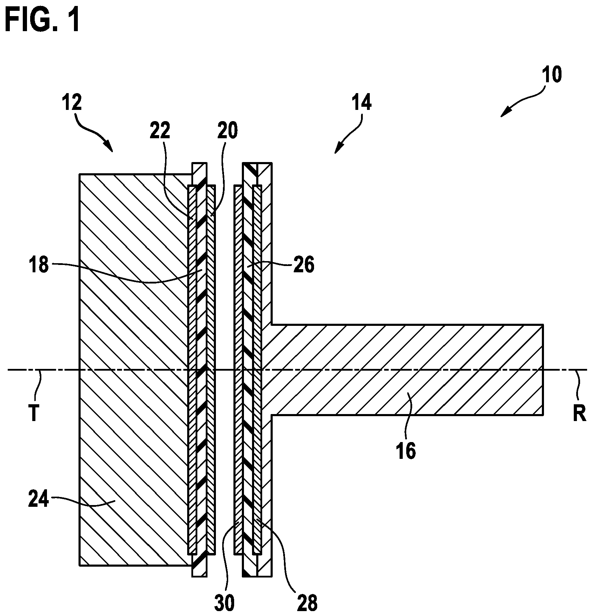

Fig. 1 zeigt einen Drehwinkelsensor 10 aus einem Statorelement 12 und einem Rotorelement 14. Das Rotorelement 14 kann auf einer Welle 16 eines Bauteils, wie etwa einer Drosselklappe, einem Motor, einer Nockenwelle, eines Fahrpedals usw., befestigt sein oder von dieser Welle 16 bereitgestellt werden. Die Welle 16 ist um die Drehachse D drehbar und das Statorelement 12 liegt dem Rotorelement 14 in der entsprechenden axialen Richtung gegenüber. Beispielsweise ist das Statorelement 12 an einem Gehäuse des Bauteils befestigt. Wenn das Statorelement 12 gegenüber der Welle 16 exakt ausgerichtet ist, stimmt die Symmetrieachse T des Statorelements 12 mit der Drehachse R überein.

Das Statorelement 12 umfasst eine Stator-Leiterplatte 18, auf der eine Statorsendespule 20 und eine Mehrzahl von Statorempfangsspulen 22 angeordnet sind. Die Leiter der Spulen 20, 22 können lediglich in zwei Ebenen, beispielsweise auf den beiden Seiten der Stator-Leiterplatte 18, angeordnet sein. Auf der Stator-Leiterplatte 18 können sich weitere Bauelemente für eine Steuereinheit 24 befinden. Die Steuereinheit 24 kann die Statorsendespule 20 mit einer Wechselspannung (beispielsweise mit einer Frequenz zwischen 1 MHz und 20 MHz, beispielsweise 5 MHz, und/oder mit einer Spannungsamplitude im Bereich von 0,5 V bis 10 V, beispielsweise 1,5 V) versorgen und in jeder Statorempfangsspule 22 eine induzierte Wechselspannung ermitteln. Basierend auf diesen Messungen kann die Steuereinheit 24 einen relativen Drehwinkel zwischen dem Statorelement 12 und dem Rotorelement 14 bestimmen.

Das Rotorelement 14 umfasst eine Rotor-Leiterplatte 26. Auf der Rotor-Leiterplatte 26 sind eine Rotorempfangsspule 28 und eine Rotorsendespule 30 angeordnet. Die Leiter der Spulen 28, 30 können in lediglich zwei Ebenen der Rotor-Leiterplatte 26, beispielsweise auf den beiden Seiten der Rotor-Leiterplatte 26, angeordnet sein.

Alle Spulen 20, 22, 28, 30 sind als Planarspulen ausgeführt, d.h. als Spulen, die mittels Leiterbahnen auf und/oder in einer der Leiterplatten 18, 26 ausgeführt sind.

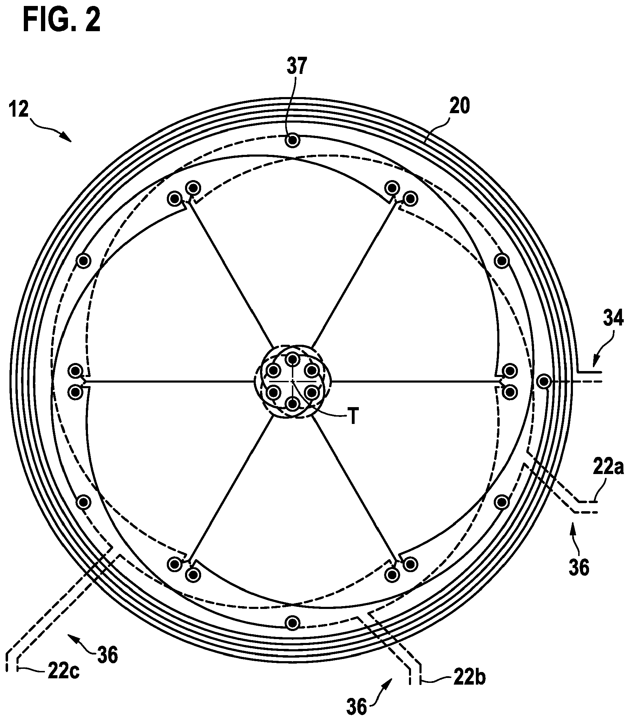

Fig. 2 zeigt das Spulenlayout eines Statorelements 12 in Draufsicht. In Fig. 2 und in den folgenden Figuren werden Leiterbahnen in einer ersten Ebene einer Leiterplatte 18, 26 durchgezogen und die in einer zweiten Ebene gestrichelt dargestellt.

In der ersten Ebene der Stator-Leiterplatte 18 ist die Statorsendespule 20 angeordnet, die eine oder mehrere umlaufende, nahezu kreisförmige Leiterschleifen aufweisen kann, die alle um die Symmetrieachse T verlaufen, die (bei korrekter Ausrichtung des Statorelements 12 und des Rotorelements 14 ohne Versatz) mit der Drehachse D des Drehwinkelsensors übereinstimmt. Der Außendurchmesser der Statorsendespule 20 kann zwischen 10 mm und 40 mm, beispielsweise 25 mm, betragen. Es ist auch möglich, dass die Leiterschleifen der Statorsendespule 20 in mehreren Ebenen einer mehrlagigen Stator-Leiterplatte 18 realisiert sind, um ein ausreichend großes Feld erzeugen zu können. Die Statorsendespule 20 ist (bis auf einen Teil ihres Anschlusses 34) in lediglich der ersten Ebene der Stator-Leiterplatte 18 angeordnet.

Innerhalb der Statorsendespule 20 sind drei Statorempfangsspulen 22a, 22b, 22c angeordnet, die (bis auf ihre Anschlüsse 36) gleichartig aufgebaut und um 120° zueinander verdreht sind. Die Statorempfangsspulen 22a, 22b, 22c sind lediglich in der ersten und der zweiten Ebene der Stator-Leiterplatte 18 angeordnet. Dabei werden sie über Anschlüsse 36 in der zweiten Ebene kontaktiert und verlaufen dann abwechselnd in der zweiten und ersten Ebene, wobei ein Ebenenwechsel mittels einer Durchkontaktierung 37 realisiert wird.

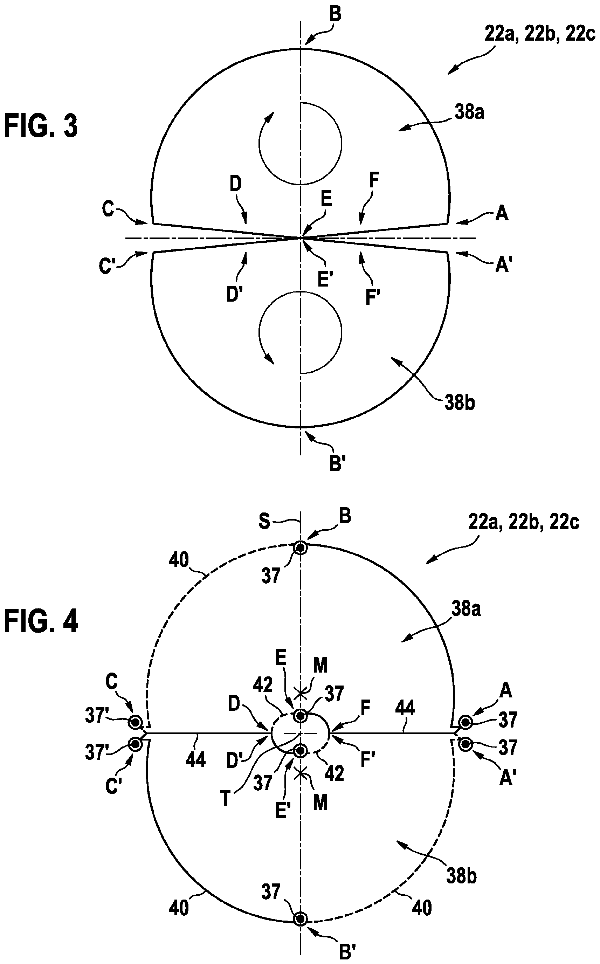

Die Fig. 3 zeigt die Geometrie einer einzelnen Statorempfangsspule 22a, 22b, 22c schematisch, während die Fig. 4 das Spulenlayout einer einzelnen Statorempfangsspule 22a, 22b, 22c zeigt. Aus Gründen der Übersichtlichkeit sind in den Fig. 3 und 4 die Anschlüsse 36 weggelassen. Weiter ist zu erwähnen, dass Fig. 3 lediglich die Form, aber nicht den genauen Verlauf der Leiterbahnen einer Statorempfangsspule 22a, 22b, 22c zeigt, während sich in der Fig. 4 Teile der Leiterbahnen überdecken.

Wie aus den Fig. 3 und 4 zu erkennen ist, weist jede der Statorempfangsspulen 22a, 22b, 22c zwei gegenläufige bzw. bezüglich des Stromflusses gegensätzlich orientierte Teilwindungen 38a, 38b auf.

Im Allgemeinen gilt, dass jede Statorempfangsspule 22a, 22b, 22c eine geradzahlige Anzahl 2m an Teilwindungen 38a, 38b aufweisen kann und dass der Messbereich *Per* des Drehwinkelsensors 10, der beispielsweise ein ganzteiliger Teiler von 360° sein kann, von der Anzahl 2m der Teilwindungen 38a, 38b jeder Statorempfangsspule 22a, 22b, 22c abhängt, wobei m=360°/Per gilt.

Beispielsweise weisen mit m = 1 die Statorempfangsspulen 22a, 22b, 22c aus den Fig. 2 und 3 zwei Teilwindungen 38a, 38b auf, was zu einer Periodizität von 360° führt.

Die gleiche Anzahl an in die eine Richtung und an in die andere Richtung orientierten Teilwindungen 38a, 38b führt dazu, dass sich die durch die Statorsendespule 20 induzierten Teilspannungen (bei fehlendem Rotorelement 14) in Summe kompensieren und als Ausgangssignal 0 V an allen Statorempfangsspulen 22a, 22b, 22c ausgegeben wird. Diese kann auch zur Eigendiagnose verwendet werden, wobei erkannt werden kann, dass das Rotorelement 14 fehlt oder zumindest eine elektrische Unterbrechung aufweist. Außerdem induzieren Störungen infolge von EMV-Einflüssen in jeder Teilwindung 38a, 38b Spannungen unterschiedlichen Vorzeichens, die sich durch die Reihenschaltung der Teilwindungen 38a, 38b wieder kompensieren (unter der Annahme, dass die Störungen im Bereich der Teilwindungen homogen sind).

In dem Statorelement 12 sind die drei Statorempfangsspulen 22a, 22b, 22c zueinander um einen Winkel $\xi$ verdreht, der sich gemäß $\xi = Per / 3$ berechnen lässt (hier beispielsweise 120°). Bei dieser Verdrehung ergibt sich ein dreiphasiges elektrisches System, welches einen elektrischen Phasenversatz von 120° aufweist.

Wie aus der Fig. 4 hervorgeht, ist jede der Teilwindungen 38a, 38b von einem radial außen liegenden Umfangsleiter 40 und einem radial innen liegenden Umfangsleiter 42 begrenzt, die jeweils von zwei Radialleitern 44 miteinander verbunden werden. In der Fig. 4 sind lediglich zwei der vier Radialleiter 44 zu erkennen, da jeweils zwei Radialleiter 44 sich überdeckend übereinander in den beiden Ebenen der Stator-Leiterplatte 18 verlaufen.

Der äußere Umfangsleiter 40 der ersten Teilwindung 38a startet am Punkt A (auch in der Fig. 3 dargestellt) bei einer Durchkontaktierung 37 und verläuft dann in der ersten Ebene bis zum Punkt B in seiner Mitte, wo er bei einer weiteren Durchkontaktierung die Ebene wechselt. Anschließend verläuft er in der zweiten Ebene bis zum Punkt C, wo er an einer Durchkontaktierung 37' endet. Die Durchkontaktierung 37' ist eine sogenannte blinde Durchkontaktierung, die zwei Leiterbahnen auf der gleichen Ebene der Stator-Leiterplatte 18 verbindet.

Am Punkt C ist der äußere Umfangsleiter 40, der hier in der zweiten Ebene verläuft, mit einem Radialleiter 44 verbunden, der in der zweiten Ebene bis zum Punkt D verläuft und dort in den inneren Umfangsleiter 42 der ersten Teilwindung 38a übergeht.

Der innere Umfangsleiter 42 der ersten Teilwindung 38a verläuft vom Punkt D bis zum Punkt E in der zweiten Ebene, wechselt am Punkt E über eine Durchkontaktierung in die erste Ebene und verläuft dann in der ersten Ebene bis zum Punkt F, wo er in einen weiteren Radialleiter 44 übergeht.

Der weitere Radialleiter 44 der ersten Teilwindung 38a verläuft dann bis zum Punkt A', an dem die zweite Teilwindung 38b beginnt. Diese ist entlang der Punkte A' bis F' genauso wie die Teilwindung 38a aufgebaut, nur, dass die beiden Ebenen der Stator-Leiterplatte 18 vertauscht sind.

Wie weiter unten noch genauer beschrieben wird, verlaufen die äußeren Umfangsleiter 40 auf Kreisen, deren Mittelpunkte derart von der Symmetrieachse T verschoben sind, dass die Punkte B, bei denen eine Durchkontaktierung 37 vorhanden ist, maximalen radialen Abstand haben. Die inneren Umfangsleiter 42 verlaufen rechts und links der jeweiligen Durchkontaktierung auch auf Kreisen, deren Mittelpunkte von der Symmetrieachse T verschoben sind, jedoch so, dass die jeweilige Durchkontaktierungen minimalen radialen Abstand haben.

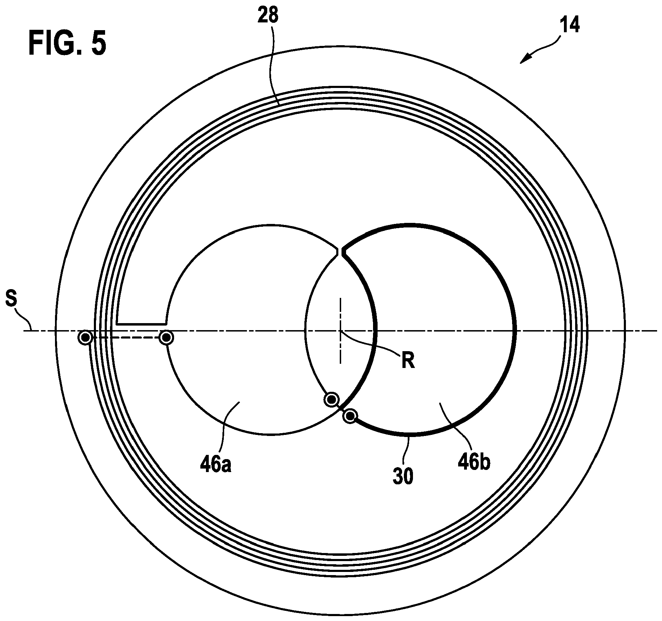

Die Fig. 5 zeigt ein Rotorelement 14 für den Drehwinkelsensor 10 aus der Fig. 1 in Draufsicht, das eine Rotorempfangsspule 28 und eine Rotorsendespule 30 umfasst und das zusammen mit dem Statorelement 12 aus den Fig. 2 bis 4 verwendet werden kann.

Die Rotorempfangsspule 28 ist im Wesentlichen kreisförmig, wobei die Drehachse R den Mittelpunkt der Rotorempfangsspule 28 darstellt, und umgibt die Rotorsendespule 30 vollständig. Die Rotorempfangsspule 28 und die Rotorsendespule 30 sind mit ihren Enden elektrisch miteinander verbunden bzw. in Reihe geschaltet. Die Rotorempfangsspule 28 kann die gleiche Fläche wie die Statorsendespule 20 umlaufen und/oder mit dieser in Bezug auf die Drehachse R fluchten. Genauso wie die Statorsendespule 20 kann die Rotorempfangsspule 28 aus einer Mehrzahl von Leiterschleifen aufgebaut sein.

Die Rotorsendespule 30 weist zwei gegenläufige Teilwindungen 46a, 46b auf, die jeweils sichelförmig sind (von denen eine zur besseren Erkennbarkeit fett dargestellt ist). Die erste Teilwindung 46a ist zu der zweiten Teilwindung 46b (bezüglich des Stromflusses) gegenläufig orientiert. Die Geometrien der Teilwindungen 46a, 46b können identisch sein. Die Teilwindungen 46a, 46b befinden sich in einem Innenbereich der Rotorsendespule 30 angeordnet. Die beiden sichelförmigen Teilwindungen 46a, 46b sind aus im Wesentlichen kreisbogenförmigen Leiterabschnitten gebildet.

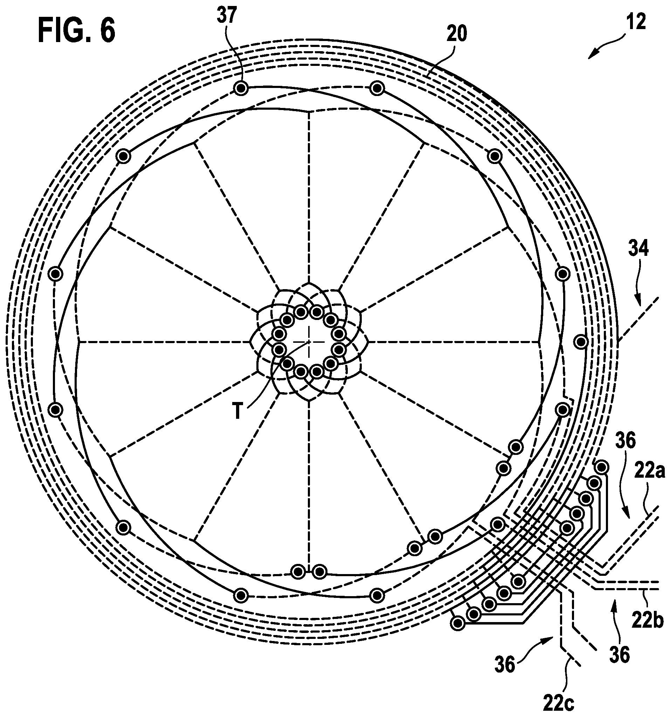

Fig. 6 zeigt analog der Fig. 2 ein Spulenlayout eines Statorelements 12 in Draufsicht. Bei dem Statorelement 12 der Fig. 6 ist die Statorsendespule 20 in zwei Ebenen der Stator-Leiterplatte 18 realisiert. Das Statorelement der Fig. 6 weist drei Statorempfangsspulen 22a, 22b, 22c auf, die auch in zwei Ebenen der Stator-Leiterplatte 18 realisiert sind.

Die Anschlüsse 36 der Statorempfangsspulen 22a, 22b, 22c verlassen den durch die Statorsendespule 20 definierten Innenbereich, in dem die Statorempfangsspulen 22a, 22b, 22c angeordnet sind, durch einen Abschnitt in der zweiten Ebene geführt, in dem Leiterschleifen der Statorsendespule 20 unterbrochen sind und über Durchkontaktierungen 37 in die erste Ebene umgeleitet sind. Dadurch können alle Spulen 20, 22a, 22b, 22c in lediglich zwei Ebenen der Stator-Leiterplatte 18 ausgebildet werden.

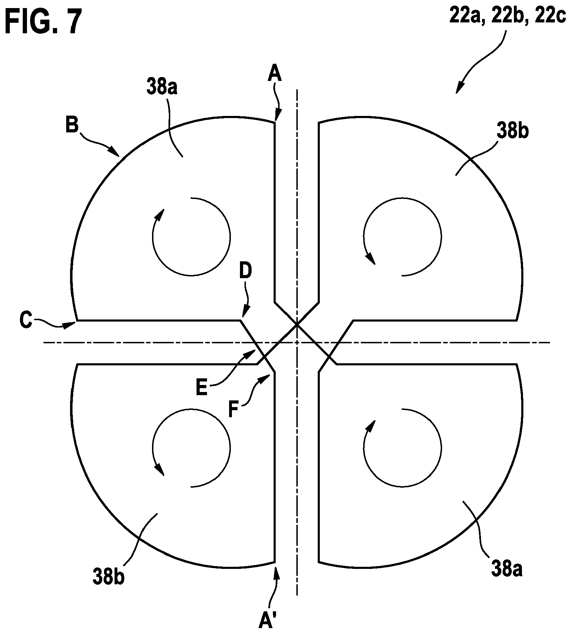

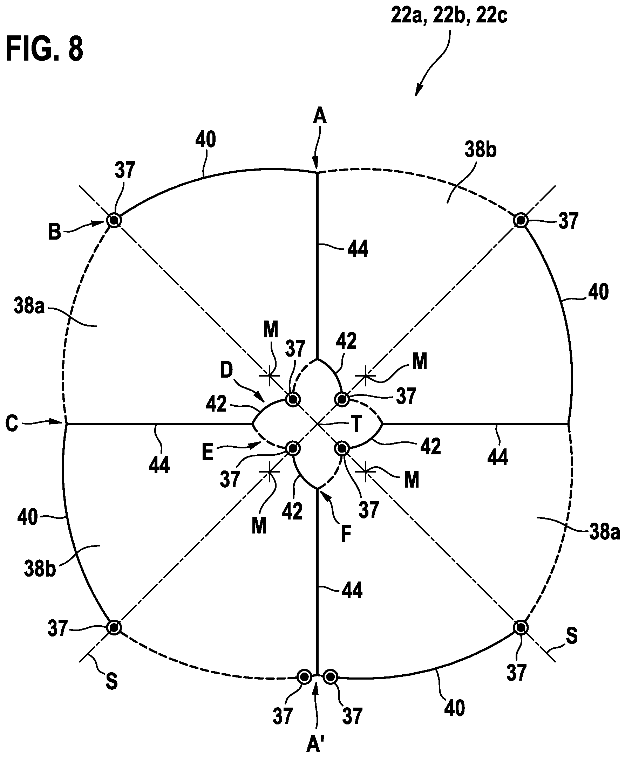

Die Statorempfangsspulen 22a, 22b, 22c werden mit den Fig. 7 und 8 (analog den Fig. 3 und 4) genauer beschrieben, wobei dort jeweils eine einzelne Statorempfangsspule 22a, 22b, 22c dargestellt ist. Wie aus der Fig. 7 hervorgeht, weist jede der Statorempfangsspulen 22a, 22b, 22c vier Teilwindungen 38a, 38b auf, die im Wesentlichen eine Kreisfläche überdecken und die die Kreisfläche in vier gleich große Flächen aufteilen. Zwei bezüglich der Symmetrieachse T gegenüberliegende Teilwindungen 38a sind in eine erste Richtung orientiert, die beiden anderen Teilwindungen 38b sind in die entgegengesetzte Richtung, d.h. gegenläufig, orientiert.

Während die Fig. 7 schematisch die Verschaltung der Leiterbahnen jeder der Statorempfangsspulen 22a, 22b, 22c zeigt, zeigt die Fig. 8 das Layout der Statorempfangsspulen 22a, 22b, 22c. Jede der Teilwindungen 38a, 38b ist genauso wie die Leiterschleifen der Fig. 4 in der ersten und zweiten Ebene der Stator-Leiterplatte 18 entlang der Punkte A bis A' geführt. Beim Punkt A' erfolgt dabei ein Ebenenwechsel, so dass bei den nachfolgenden Teilwindungen 38a, 38b die Ebenen, in denen ihre Leiterbahnen verlaufen, vertauscht sind.

Wie weiter unten noch genauer beschrieben wird, verlaufen die äußeren Umfangsleiter 40 auf Kreisen, deren Mittelpunkte derart von der Symmetrieachse T verschoben sind, dass die Punkte B, bei denen eine Durchkontaktierung 37 vorhanden ist, maximalen radialen Abstand haben. Die inneren Umfangsleiter 42 verlaufen rechts und links der jeweiligen Durchkontaktierung auch auf Kreisen, deren Mittelpunkte von der Symmetrieachse T verschoben sind, jedoch so, dass die jeweiligen Durchkontaktierungen minimalen radialen Abstand haben.

Da die Statorempfangsspulen 22a, 22b, 22c der Fig. 6 bis 8 aus jeweils vier Teilwindungen 38a, 38b aufgebaut sind (die jeweils 90° der Fläche innerhalb der Statorsendespule 20 überdecken), sind sie gegeneinander um 60° verschoben (siehe Fig. 6), was zu einem Messbereich von 180° des Drehwinkelsensors 10 führt.

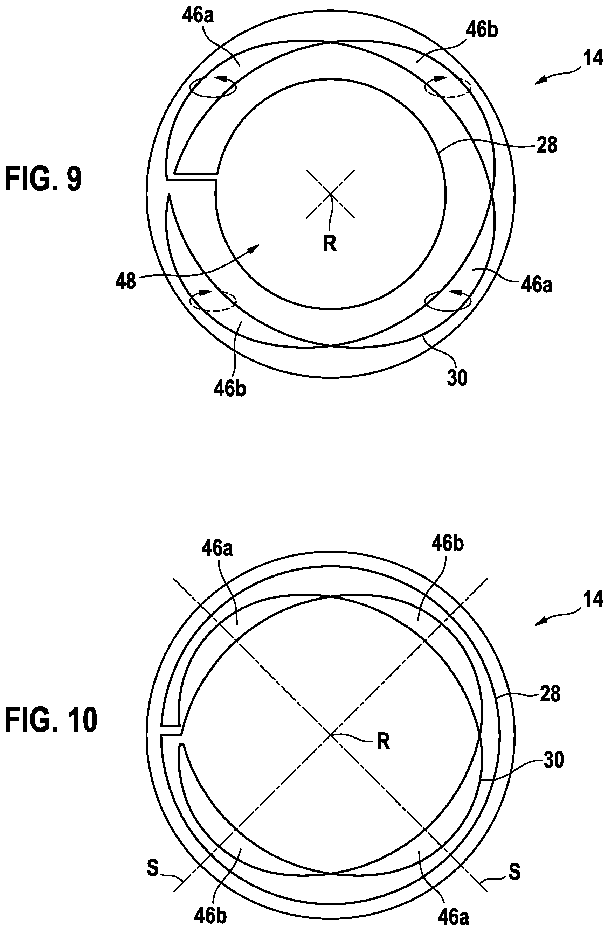

In den Fig. 9 und 10 ist das Layout von Rotorelementen 14 gezeigt, die zusammen mit dem Statorelement 12 aus den Fig. 6 bis 8 verwendet werden können. In beiden Fig. 9 und 10 ist die Rotorsendespule 30 aus vier sichelförmigen Teilwindungen 46a, 46b aufgebaut, die die Drehachse R in Umfangsrichtung umgeben und jeweils 90° überdecken.

Bei dem Rotorelement 14 aus der Fig. 9 ist die Rotorempfangsspule 28 innerhalb der Rotorsendespule 30 angeordnet.

Durch die sichelförmigen Teilwindungen 46a, 46b der Rotorsendespule 30 kann der Innenbereich 48 innerhalb der Rotorsendespule 30 verwendet werden, um dort die Rotorempfangsspule 28 zu integrieren. Dies kann den Vorteil aufweisen, dass zum einen das Rotorelement 14 kleiner und kostengünstiger gefertigt werden kann, und zum anderen, dass die Amplitude der in der Rotorempfangsspule 28 induzierten Wechselspannung nicht von lateralen Verschiebungen zwischen dem Rotorelement 14 und dem Statorelement 12 abhängt.

In Fig. 10 ist die Rotorempfangsspule 28 außerhalb der Rotorsendespule 28 angeordnet. Dadurch kann ein stärkerer Stromfluss in der Rotorempfangsspule 28 generiert werden.

Im Folgenden wird nun ein Verfahren beschrieben, mit dem das Spulenlayout für die Statorelemente 12 aus den Fig. 4 (Messbereich von 360°) und Fig. 8 (Messbereich 180°) erzeugt werden kann, aber nicht auf diese zwei Messbereiche beschränkt ist. Aus diesem Grund werden Formeln angegeben, die allgemein gültig sind.

Eine optimale Ausnutzung der üblicherweise runden Sensorgrundfläche, d.h. der von der Statorsendespule 20 umschlossenen Fläche, kann durch eine geschickte Positionierung von mehreren Konstruktionskreisen realisiert werden, aus denen anschließend die Teilwindungen 38a, 38b der Statorempfangsspulen 22a, 22b, 22c zusammengesetzt werden. Für je ein Paar radial gegenüberliegende Teilwindungen 38a, 38b (ein Paar bei der Fig. 4, zwei Paare bei der Fig. 8) werden die äußeren Umfangsleiter 40 durch zwei Konstruktionskreise definiert, die zueinander entlang der Spiegelsymmetrieachse S der beiden Teilwindungen 38a, 38b verschoben sind und deren Mittelpunkte M sich auf dieser Spiegelsymmetrieachse S befinden.

Bei mehreren Paaren (Anzahl m) von Teilwindungen 38a, 38b sind die Spiegelsymmetrieachsen S so angeordnet, dass sie jeweils um 180°/m zueinander verschoben sind, d.h. beispielsweise stehen die beiden Spiegelsymmetrieachsen S aus der Fig. 8 orthogonal (90°) aufeinander.

Der Durchmesser der Konstruktionskreise kann etwa 1/3 des Durchmessers der Statorsendespule 20 betragen. Die Verschiebung von jeweils zwei Konstruktionskreisen zueinander kann zwischen 30% und 50% ihres Durchmessers betragen, beispielsweise 40%. Auf diese Weise kann einerseits eine maximale Flächenausnutzung gewährleistet werden und kann andererseits eine Realisierung von drei verdrehten Statorempfangsspulen 22a, 22b, 22c in zwei Ebenen ermöglicht werden.

Die Radialleiter 44, die die äußeren Umfangsleiter 40 mit den inneren Umfangsleitern 42 verbinden, verlaufen dabei radial bezüglich der Symmetrieachse T. Die Außenenden der Radialleiter liegen auf den Schnittpunkten der Konstruktionskreise um die Mittelpunkte M liegen.

Auch die inneren Umfangsleiter 42 können mit Konstruktionskreisen definiert werden, wobei pro Teilwindung 38a, 38b zwei Konstruktionskreise verwendet werden, deren Mittelpunkte entlang einer Achse orthogonal zur Spiegelsymmetrieachse S der Teilwindungen 38a, 38b verschoben sind. Dies ergibt insgesamt 4m Konstruktionskreise für die inneren Umfangsleiter 42. Der Durchmesser der Konstruktionskreise für die inneren Umfangsleiter 42 beträgt 10% bis 20% des Durchmessers der Konstruktionskreise für die äußeren Umfangsleiter 40, beispielsweise 15%.

Der Schnittpunkt der beiden Konstruktionskreise für einen inneren Umfangsleiter 42, der näher an der Symmetrieachse T liegt, definiert dabei die Position der Durchkontaktierung 37.

Auch die Rotorsendespule 30 (siehe Fig. 5, 9 und 10) kann basierend auf mehreren Konstruktionskreisen definiert werden.

Bei der Fig. 5 (Messbereich 360°) können die Teilwindungen 46a, 46b dabei durch zwei Konstruktionskreise mit gleichem Durchmesser definiert werden, deren Mittelpunkte entlang einer Spiegelsymmetrieachse S der Teilwindungen 46a, 46b zueinander verschoben sind.

Bei den Fig. 9 und 10 werden die vier Teilwindungen 46a, 46b durch einen größeren Konstruktionskreis um die Symmetrieachse T und vier kleinere Konstruktionskreise, deren Mittelpunkt entlang der Spiegelsymmetrieachsen S verschoben sind, definiert. Es hat sich herausgestellt, dass das beste Messsignal erzielt werden kann, wenn das Verhältnis der Durchmesser der Konstruktionskreise etwa $\sqrt{2}$ ist.

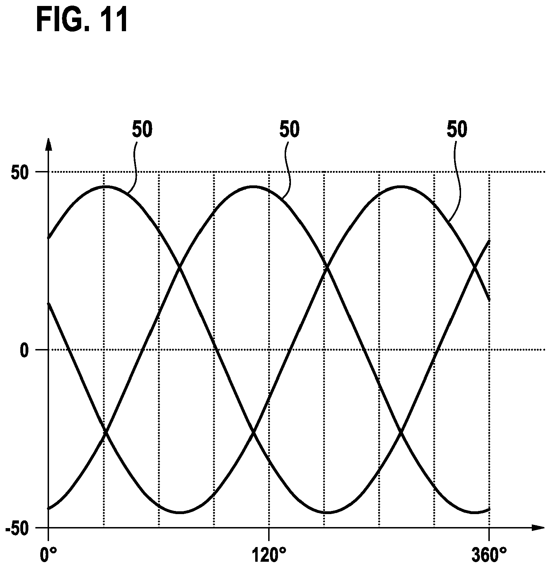

Die Fig. 11 zeigt ein Diagramm mit drei sinusförmigen Messsignalen 50, die von den Statorempfangsspulen 22a, 22b, 22c eines Drehwinkelsensors 10 basierend auf den Fig. 2 bis 5 abgegeben werden können. Bei einem Drehwinkelsensor 10 basierend auf den Fig. 6 bis 10 würde sich der Messbereich nicht über 360°, sondern 180° erstrecken und die Messsignale 50 wären über diesen Bereich periodisch.

Die Messsignale 50 stellen auf der y-Achse die Amplitude einer in einer Statorempfangsspule 22a, 22b, 22c induzierten Wechselspannung dar, der vom Winkel des Rotorelements 14 gegenüber dem Statorelement 12 (x-Achse) abhängig ist.

Aufgrund unterschiedlich langer Zuleitungen, einer Positionierung von Leiterbahnen in unterschiedlichen Ebenen der Leiterplatte 18 und mechanischer Toleranzen sind die Messsignale 50 in der Regel offsetbehaftet (d.h., die drei Messsignale 50 verlaufen nicht symmetrisch bezüglich der x-Achse).

Dieser Offset kann aus möglichst sinusförmigen Messsignalen 50 besonders leicht herausgerechnet werden, beispielsweise über eine Clarke-Transformation. Beispielsweise entstehen in den drei Statorempfangsspulen 22a, 22b, 22c drei sinusförmige Messsignale 50 mit 120° elektrischem Phasenversatz bezogen auf den Messbereich β, die durch Anwendung einer Clarke-Transformation in ein offsetfreies Sinus/Cosinus-System überführt werden können. Mithilfe der ArcusTangens-Funktion kann dann daraus auf den Drehwinkel geschlossen werden.

Möglichst sinusförmige Messsignale können auch deshalb vorteilhaft sein, weil trigonometrische Gesetze wie z.B. $\sin^2+\cos^2=1$ Anwendung finden können und zumindest für eine Plausibilisierung der Signale oder aber für eine Korrektur verwendet werden können.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Drehwinkelsensor (10), umfassend:

ein Statorelement (12) mit einer Statorsendespule (20) und wenigstens zwei zueinander winkelversetzten, gleichartig aufgebauten Statorempfangsspulen (22a, 22b, 22c), die in einer Leiterplatte (18) ausgebildet sind;
ein bezüglich des Statorelements (12) um eine Drehachse (R) drehbar gelagertes Rotorelement (14) mit einer Rotorempfangsspule (28) und einer Rotorsendespule (30), die miteinander elektrisch verbunden sind;
wobei die Rotorempfangsspule (28) mit der Statorsendespule (20) induktiv gekoppelt ist, so dass ein durch die Statorsendespule (20) erzeugtes elektromagnetisches Feld in der Rotorempfangsspule (28) einen Strom induziert, der durch die Rotorsendespule (30) fließt, so dass die Rotorsendespule (30) ein weiteres elektromagnetisches Feld erzeugt;
wobei die wenigstens zwei Statorempfangsspulen (22a, 22b, 22c) mit der Rotorsendespule (30) induktiv gekoppelt sind, so dass die induktive Kopplung von einem Drehwinkel zwischen dem Statorelement (12) und dem Rotorelement (14) abhängig ist, und das von der Rotorsendespule (30) erzeugte weitere elektromagnetische Feld in den wenigstens zwei Statorempfangsspulen (22a, 22b, 22c) wenigstens zwei winkelabhängige Wechselspannungen induziert;
**dadurch gekennzeichnet, dass**
jede der wenigstens zwei Statorempfangsspulen (22) aus einer Mehrzahl von Radialleitern (44) und Umfangsleitern (40, 42) aufgebaut ist, die in zwei Ebenen einer Leiterplatte (18) gebildet sind, so dass je Statorempfangsspule (22a, 22b, 22c) aus den Radialleitern (44) und den Umfangsleitern (40, 42) wenigstens zwei gegenläufige Teilwindungen (38a, 38b) gebildet sind;
wobei die Radialleiter (44) in radialer Richtung von einem Innenende zu einem Außenende verlaufen und jeweils zwei Radialleiter (44) mit gegenläufiger Stromrichtung zumindest teilweise überdeckend auf der Leiterplatte (18) angeordnet sind;
wobei die Umfangsleiter (40, 42) in Umfangsrichtung verlaufen, ein Umfangsleiter (40, 42) jeweils zwei Innenenden oder jeweils zwei Außenenden von Radialleitern (44) verbindet und jeder der Umfangsleiter (40, 42) eine Durchkontaktierung (37) aufweist, bei der der Umfangsleiter (40, 42) die Ebenen der Leiterplatte (18) wechselt.

2. Drehwinkelsensor (10) nach Anspruch 1, wobei die Umfangsleiter (40, 42) zwischen einer Durchkontaktierung (37) und einem Ende und/oder zwischen ihren Enden bogenförmig gekrümmt sind.

3. Drehwinkelsensor (10) nach Anspruch 1 oder 2, wobei die Statorsendespule (20) und die Statorempfangsspulen (22a, 22b, 22c) zusammen in zwei Ebenen der Leiterplatte (18) ausgebildet sind.

4. Drehwinkelsensor (10) nach einem der vorhergehenden Ansprüche, wobei die Durchkontaktierung (37) eines Umfangsleiters (40, 42) in einer Mitte zwischen den beiden Außenenden bzw. Innenende der jeweiligen Radialleiter (44) angeordnet ist.

5. Drehwinkelsensor (10) nach einem der vorhergehenden Ansprüche, wobei die Durchkontaktierungen (37) der die Innenenden der Radialleiter (44) verbindenden Umfangsleiter (42) radial weiter innen liegen als die jeweiligen Innenenden; und/oder wobei die Durchkontaktierungen (37) der die Außenenden der Radialleiter (44) verbindenden Umfangsleiter (42) radial weiter außen liegen als die jeweiligen Außenenden; und/oder wobei die Durchkontaktierungen (37) der die Innenenden der Radialleiter (44) verbindenden Umfangsleiter (42) an einer Stelle des jeweiligen Umfangsleiters (42) mit minimalem Abstand zu einer Symmetrieachse (T) angeordnet sind; und/oder wobei die Durchkontaktierungen (37) der die Außenenden der Radialleiter (44) verbindenden Umfangsleiter (40) an einer Stelle des jeweiligen Umfangsleiters (40) mit maximalem Abstand zu einer Symmetrieachse (T) angeordnet sind.

6. Drehwinkelsensor (10) nach einem der vorhergehenden Ansprüche, wobei die Innenenden der Radialleiter (44) alle einen gleichen Abstand zu einer Symmetrieachse (T) aufweisen; und/oder wobei die Außenenden der Radialleiter (44) alle einen gleichen Abstand von einer Symmetrieachse (T) aufweisen.

7. Drehwinkelsensor (10) nach einem der vorhergehenden Ansprüche, wobei am Ende eines Umfangsleiters (40) eine Durchkontaktierung (37) angeordnet ist, die ein Ende eines Radialleiters (44) mit dem Umfangsleiter (40) in einer anderen Ebene der Leiterplatte (18) verbindet.

8. Drehwinkelsensor (10) nach Anspruch 7, wobei am Ende eines Umfangsleiters (40) eine blinde Durchkontaktierung (37') vorgesehen ist, die ein Ende eines Radialleiters (44) mit dem Umfangsleiter (40) auf der gleichen Ebene verbindet; wobei die blinde Durchkontaktierung (37') symmetrisch zu einer weiteren Durchkontaktierung (37') an einem Ende eines Umfangsleiters (40) angeordnet ist.

9. Drehwinkelsensor (10) nach einem der vorhergehenden Ansprüche, wobei die Rotorsendespule (30) in wenigstens zwei Teilwindungen (46a, 46b) aufgeteilt ist, die gegenläufig orientiert sind.

10. Drehwinkelsensor (10) nach einem der vorhergehenden Ansprüche, wobei Teilwindungen (46a, 46b) der Rotorsendespule (30) sichelförmig ausgebildet sind.

**Claims**

1. Rotational angle sensor (10), comprising:

a stator element (12) having a stator transmitting coil (20) and at least two identically constructed stator receiving coils (22a, 22b, 22c), which are angularly offset with respect to one another and are formed in a printed circuit board (18); a rotor element (14), mounted rotatably about an axis (R) of rotation with respect to the stator element (12) and having a rotor receiving coil (28) and a rotor transmitting coil (30), which are electrically connected to one another; wherein the rotor receiving coil (28) is inductively coupled to the stator transmitting coil (20), such that an electromagnetic field generated by the stator transmitting coil (20) induces a current in the rotor receiving coil (28), said current flowing through the rotor transmitting coil (30), such that the rotor transmitting coil (30) generates a further electromagnetic field; wherein the at least two stator receiving coils (22a, 22b, 22c) are inductively coupled to the rotor transmitting coil (30), such that the inductive coupling is dependent on a rotational angle between the stator element (12) and the rotor element (14), and the further electromagnetic field generated by the rotor transmitting coil (30) induces at least two angle-dependent AC voltages in the at least two stator receiving coils (22a, 22b, 22c);

**characterized in that**

each of the at least two stator receiving coils (22) is constructed from a plurality of radial conductors (44) and circumferential conductors (40, 42), which are formed in two planes of a printed circuit board (18), such that at least two oppositely directed partial windings (38a, 38b) are formed per stator receiving coil (22a, 22b, 22c) from the radial conductors (44) and the circumferential conductors (40, 42);

wherein the radial conductors (44) extend in a radial direction from an inner end to an outer end and in each case two radial conductors (44) having an opposite current direction are arranged in an at least partly overlapping manner on the printed circuit board (18);

wherein the circumferential conductors (40, 42) extend in a circumferential direction, a circumferential conductor (40, 42) connects in each case two inner ends or in each case two outer ends of radial conductors (44), and each of the circumferential conductors (40, 42) has a plated-through hole (37) at which the circumferential conductor (40, 42) changes the planes of the printed circuit board (18).

2. Rotational angle sensor (10) according to Claim 1, wherein the circumferential conductors (40, 42) are curved arcuately between a plated-through hole (37) and one end and/or between their ends.

3. Rotational angle sensor (10) according to Claim 1 or 2,
   wherein the stator transmitting coil (20) and the stator receiving coils (22a, 22b, 22c) are formed together in two planes of the printed circuit board (18).

4. Rotational angle sensor (10) according to any of the preceding claims,
   wherein the plated-through hole (37) of a circumferential conductor (40, 42) is arranged in a center between the two outer ends or respectively inner end of the respective radial conductors (44).

5. Rotational angle sensor (10) according to any of the preceding claims,
   wherein the plated-through holes (37) of the circumferential conductors (42) connecting the inner ends of the radial conductors (44) lie radially further inward than the respective inner ends; and/or
   wherein the plated-through holes (37) of the circumferential conductors (42) connecting the outer ends of the radial conductors (44) lie radially further outward than the respective outer ends; and/or
   wherein the plated-through holes (37) of the circumferential conductors (42) connecting the inner ends of the radial conductors (44) are arranged at a location of the respective circumferential conductor (42) with minimum distance with respect to an axis (T) of symmetry; and/or
wherein the plated-through holes (37) of the circumferential conductors (40) connecting the outer ends of the radial conductors (44) are arranged at a location of the respective circumferential conductor (40) with maximum distance with respect to an axis (T) of symmetry.

6. Rotational angle sensor (10) according to any of the preceding claims,
   wherein the inner ends of the radial conductors (44) are all at an identical distance with respect to an axis (T) of symmetry; and/or
   wherein the outer ends of the radial conductors (44) are all at an identical distance from an axis (T) of symmetry.

7. Rotational angle sensor (10) according to any of the preceding claims,
   wherein a plated-through hole (37) is arranged at the end of a circumferential conductor (40), which plated-through hole connects an end of a radial conductor (44) to the circumferential conductor (40) in a different plane of the printed circuit board (18).

8. Rotational angle sensor (10) according to Claim 7,
   wherein a blind plated-through hole (37') is provided at the end of a circumferential conductor (40), which blind plated-through hole connects an end of a radial conductor (44) to the circumferential conductor (40) on the same plane;
   wherein the blind plated-through hole (37') is arranged symmetrically with respect to a further plated-through hole (37') at an end of a circumferential conductor (40).

9. Rotational angle sensor (10) according to any of the preceding claims,
   wherein the rotor transmitting coil (30) is divided into at least two partial windings (46a, 46b) which are oriented in opposite directions.

10. Rotational angle sensor (10) according to any of the preceding claims,
    wherein partial windings (46a, 46b) of the rotor transmitting coil (30) are configured in sickle-shaped fashion.

## Revendications

1. Capteur d'angle de rotation (10), comprenant :

   un élément stator (12) doté d'une bobine émettrice de stator (20) et d'au moins deux bobines réceptrices de stator (22a, 22b, 22c) décalées angulairement entre elles et de construction identique, lesquelles sont formées dans un circuit imprimé (18) ;

un élément rotor (14), monté à rotation autour d'un axe de rotation (R) par rapport à l'élément stator (12), doté d'une bobine réceptrice de rotor (28) et d'une bobine émettrice de rotor (30) qui sont reliées électriquement l'une à l'autre ;

la bobine réceptrice de rotor (28) étant couplée inductivement avec la bobine émettrice de stator (20), de sorte qu'un champ électromagnétique généré par la bobine émettrice de stator (20) induise dans la bobine réceptrice de rotor (28) un courant qui circule à travers la bobine émettrice de rotor (30), de sorte que la bobine émettrice de rotor (30) génère un champ électromagnétique supplémentaire ;

les au moins deux bobines réceptrices de stator (22a, 22b, 22c) étant couplées inductivement avec la bobine émettrice de rotor (30), de sorte que le couplage inductif soit dépendant d'un angle de rotation entre l'élément stator (12) et l'élément rotor (14), et le champ électromagnétique supplémentaire généré par la bobine émettrice de rotor (30) induise dans les au moins deux bobines réceptrices de stator (22a, 22b, 22c) au moins deux tensions alternatives dépendantes de l'angle ;

**caractérisé en ce que**

chacune des au moins deux bobines réceptrices de stator (22) est constituée d'une pluralité de conducteurs radiaux (44) et de conducteurs périphériques (40, 42) qui sont formés dans deux plans d'un circuit imprimé (18), de sorte que pour chaque bobine réceptrice de stator (22a, 22b, 22c), au moins deux enroulements partiels (38a, 38b) opposés sont formés par les conducteurs radiaux (44) et les conducteurs périphériques (40, 42) ;

les conducteurs radiaux (44) suivant un tracé dans la direction radiale d'une extrémité interne à une extrémité externe et deux conducteurs radiaux (44) ayant des directions du courant opposées étant respectivement disposés au moins partiellement en chevauchement sur le circuit imprimé (18) ;

les conducteurs périphériques (40, 42) suivant un tracé dans la direction périphérique, un conducteur périphérique (40, 42) reliant respectivement deux extrémités internes ou respectivement deux extrémités externes de conducteurs radiaux (44) et chacun des conducteurs périphériques (40, 42) possédant un contact traversant (37) au niveau duquel le conducteur périphérique (40, 42) change les plans du circuit imprimé (18) .

2. Capteur d'angle de rotation (10) selon la revendication 1, les conducteurs périphériques (40, 42) étant courbés en forme d'arc entre un contact traversant (37) et une extrémité et/ou entre leurs extrémités.

3. Capteur d'angle de rotation (10) selon la revendication 1 ou 2, la bobine émettrice de stator (20) et les bobines réceptrices de stator (22a, 22b, 22c) étant configurées ensemble dans deux plans du circuit imprimé (18).

4. Capteur d'angle de rotation (10) selon l'une des revendications précédentes, le contact traversant (37) d'un conducteur périphérique (40, 42) étant disposé dans un centre entre les deux extrémités externes ou les extrémités internes du conducteur radial (44) respectif.

5. Capteur d'angle de rotation (10) selon l'une des revendications précédentes,
les contacts traversants (37) des conducteurs périphériques (42) qui relient les extrémités internes des conducteurs radiaux (44) étant situés plus loin à l'intérieur dans le sens radial que les extrémités internes respectives ; et/ou
les contacts traversants (37) des conducteurs périphériques (42) qui relient les extrémités externes des conducteurs radiaux (44) étant situés plus loin à l'extérieur dans le sens radial que les extrémités externes respectives ; et/ou
les contacts traversants (37) des conducteurs périphériques (42) qui relient les extrémités internes des conducteurs radiaux (44) étant disposés à un endroit du conducteur périphérique (42) respectif qui présente l'écart minimal par rapport à un axe de symétrie (T) ; et/ou
les contacts traversants (37) des conducteurs périphériques (40) qui relient les extrémités externes des conducteurs radiaux (44) étant disposés à un endroit du conducteur périphérique (40) respectif qui présente l'écart maximal par rapport à un axe de symétrie (T).

6. Capteur d'angle de rotation (10) selon l'une des revendications précédentes,
les extrémités internes des conducteurs radiaux (44) présentant toutes un écart identique par rapport à un axe de symétrie (T) ; et/ou
les extrémités externes des conducteurs radiaux (44) présentant toutes un écart identique par rapport à un axe de symétrie (T).

7. Capteur d'angle de rotation (10) selon l'une des revendications précédentes, un contact traversant (37) étant disposé à l'extrémité d'un conducteur périphérique (40), lequel relie une extrémité d'un conducteur radial (44) au conducteur périphérique (40) dans un autre plan du circuit imprimé (18).

**8.** Capteur d'angle de rotation (10) selon la revendication 7,
un contact traversant borgne (37') se trouvant à une extrémité d'un conducteur périphérique (40), lequel relie une extrémité d'un conducteur radial (44) au conducteur périphérique (40) sur le même plan ;
le contact traversant borgne (37') étant disposé de manière symétrique par rapport à un contact traversant supplémentaire (37') à une extrémité d'un conducteur périphérique (40).

**9.** Capteur d'angle de rotation (10) selon l'une des revendications précédentes, la bobine émettrice de rotor (30) étant divisée en au moins deux enroulements partiels (46a, 46b) qui sont orientés en sens inverse.

**10.** Capteur d'angle de rotation (10) selon l'une des revendications précédentes, les enroulements partiels (46a, 46b) de la bobine émettrice de rotor (30) étant réalisés en forme de croissant.

FIG. 1

# FIG. 2

FIG. 3

FIG. 4

**FIG. 5**

**FIG. 6**

**FIG. 7**

22a, 22b, 22c

38a

B

A

38b

D

C

E

F

38b

A'

38a

FIG. 8

FIG. 9

46a

46b

14

28

R

48

46a

46b

30

FIG. 10

46a

46b

14

28

R

30

S

S

46b

46a

# FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0909955 B1

- EP 2570776 A2